# DEMANDE DE BREVET EUROPEEN

(11) **EP 1 013 165 A1**
(43) Date de publication de la demande: **28.06.2000**
(21) Numéro de dépôt: 99430033.3
(22) Date de dépôt: 21.12.1999
(51) Int. Cl.: A01K 13/00

(54) **Gilet de protection pour chien**

(30) Priorité: 21.12.1998 FR 9816394
(71) Demandeur: Abdi, Aimé, 04230 Malefougasse (FR)
(72) Inventeur: Abdi, Aimé, 04230 Malefougasse (FR)
(74) Mandataire: Renaud-Goud, Thierry

(57) **Abrégé**

L'invention présente un gilet de protection pour chien comportant deux orifices 1 prévus pour les pattes antérieures et une première fermeture 3 au niveau du dos. Ce gilet comporte de plus une deuxième fermeture 2 au niveau du cou.

## Description

La présente invention concerne un gilet de protection pour les chiens.

Elle vise particulièrement la protection corporelle des chiens de chasse face aux assauts de leur gibier, notamment ceux du sanglier.

Traditionnellement, ces chiens sont utilisés pour courser et rabattre le gibier et non pour lui faire face et le combattre. Ils ne sont donc pas protégés.

Cependant, l'abondance de nourriture, les hivers moins rigoureux, et l'utilisation intensive d'appâts à base de grain sont autant de facteurs à l'origine d'une suralimentation des gibiers qui, ne pouvant plus courir très longtemps devant les chiens, se trouvent obligés de leurs faire face. Ces attaques se traduisent la plupart du temps par des blessures de plus en plus graves pour les chiens. En effet, les blessures au niveau du poitrail, du coeur, des poumons ou du ventre affectent des fonctions vitales.

La présente invention a ainsi pour objet de tempérer les coups portés aux chiens, les préservant ainsi de blessures parfois mortelles.

Selon l'invention, un gilet de protection pour chien comporte deux orifices prévus pour les pattes antérieures et une première fermeture au niveau du dos, et il comporte de plus une deuxième fermeture au niveau du cou.

Cette deuxième fermeture au niveau du cou apporte une sécurité supplémentaire car elle permet de pallier une défaillance de la fermeture au niveau du dos. Le gilet se trouve mieux maintenu, surtout lorsque cette deuxième fermeture est réglable, si bien qu'il présente moins de risques d'arrachement.

Avantageusement, la deuxième fermeture est dans le prolongement de la première fermeture.

Par ailleurs, le gilet de protection comporte une bande fluorescente qui est de préférence interchangeable.

De même, le gilet de protection comporte un numéro d'identification.

Selon une première caractéristique additionnelle, la première fermeture est ajustable.

Selon une deuxième caractéristique additionnelle, la face externe du gilet de protection est réalisée dans une matière résistante aux agressions.

Selon une troisième caractéristique additionnelle, le gilet est formé d'une enveloppe entourant une membrane de protection.

Avantageusement, cette membrane de protection comporte une couche de blindage.

De plus, la couche de blindage est composée d'une pluralité de feuilles en tissu aramide.

Selon un mode de réalisation privilégié, la membrane de protection est amovible.

D'autre part, le gilet de protection comporte une boucle de serrage à proximité des orifices.

De même, il peut comporter une boucle de serrage disposée sensiblement en son centre.

La présente invention apparaîtra maintenant avec plus de détails dans le cadre de la description qui suit d'exemples de réalisation donnés à titre illustratif en se référant aux figures annexées qui représentent :
- la figure 1, une vue latérale d'un gilet de protection selon l'invention,
- la figure 2, un schéma d'une fermeture au niveau du dos,
- la figure 3, une vue à plat de ce gilet, et
- la figure 4, une vue à plat de ce gilet pourvu de deux boucles de serrage.

Les éléments identiques sont affectés d'une seule et même référence.

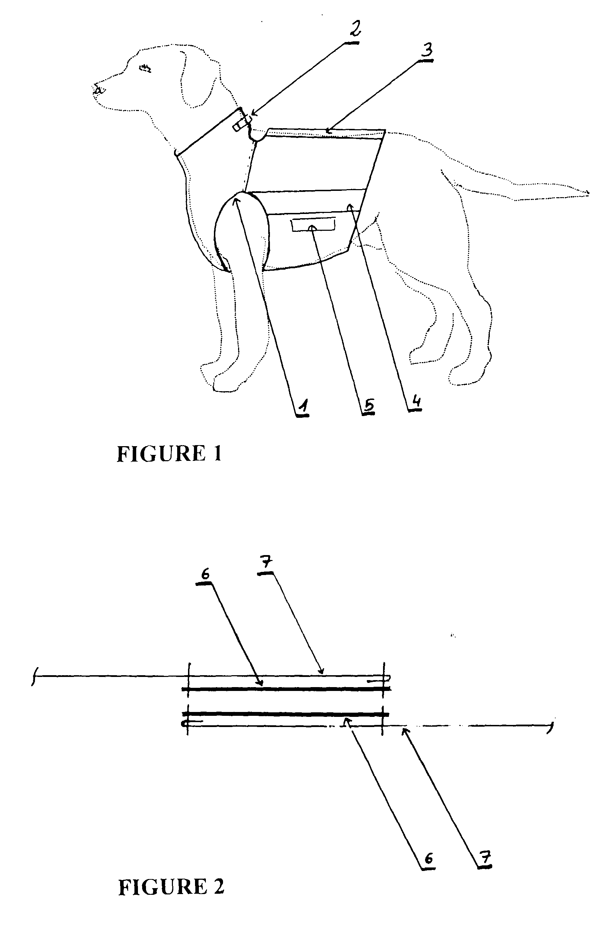

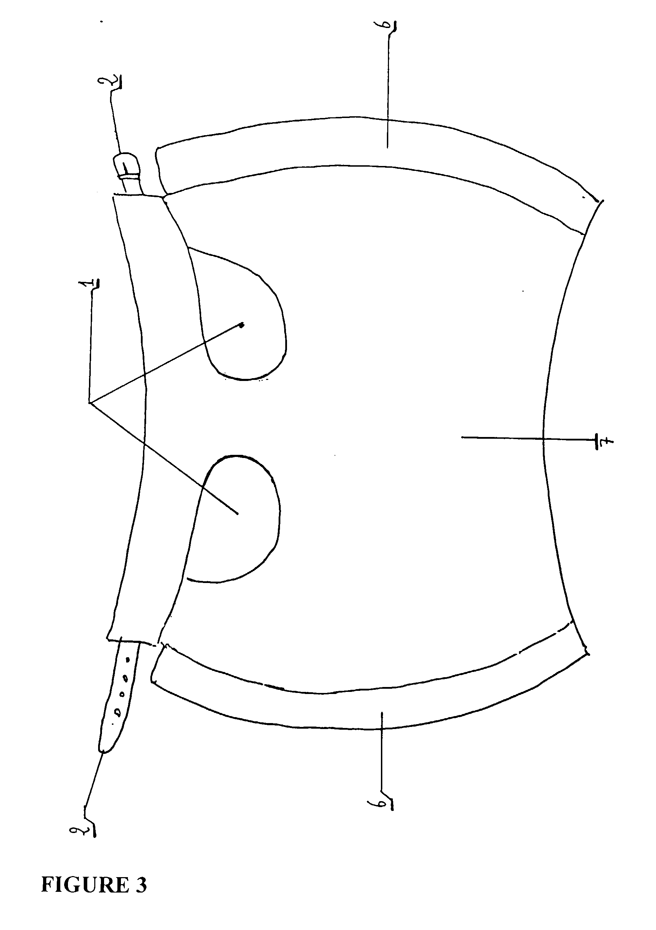

En référence aux figures 1 et 3, le gilet de protection comporte deux orifices 1 pour les pattes antérieures; Il est également pourvu d'une première fermeture 3 au niveau du dos. Cette fermeture 3 comporte de préférence des bandes élastiques qui facilitent l'ajustement du gilet.

Ce gilet comporte également une deuxième fermeture 2 au niveau du cou qui peut être disposée dans le prolongement de la première fermeture.

Par ailleurs, sur l'un au moins des flancs du gilet figurent une bande fluorescente 4 et un numéro d'identification 5. Tant la bande que le numéro peuvent être interchangeables.

En référence à la figure 2, un mode de réalisation particulier de la première fermeture 3 au niveau du dos est présenté. Deux bandes auto-agripantes fixées au corps 7 du gilet se juxtaposent et permettent une fermeture homogène et réglable.

Le gilet de protection est réalisé dans une matière résistante aux agressions telles que coupures, morsures et autres coups qui pourraient être portés au chien par le gibier. A noter que seule la face externe de ce gilet nécessite une telle résistance.

Selon une caractéristique avantageuse, le gilet de protection a la forme d'une jaquette, cette jaquette formant une enveloppe pour une membrane de protection.

La jaquette se présente donc comme l'assemblage de deux parois identiques qui sont superposées.

Naturellement, la membrane de protection sera de préférence très solide. On pense en particulier aux chiens employés dans les métiers de la sécurité tels que le gardiennage, la police ou les douanes.

Dans ce cas, il est judicieux de prévoir que la membrane de protection réalise un blindage, à tout le moins qu'elle comporte une couche de blindage.

A titre d'exemple, une telle couche de blindage est composée d'une pluralité de feuilles, de l'ordre de 6 à 10, en tissu aramide.

La jaquette présente donc deux parois qui sont assemblées de préférence pour partie de manière fixe ou permanente et pour partie au moyen d'un système mobile quelconque permettant l'introduction de la membrane, un système à coulissement par exemple. Ainsi la membrane est amovible, ce qui permet de remplacer la jaquette lorsqu'elle est abîmée tout en conservant la membrane.

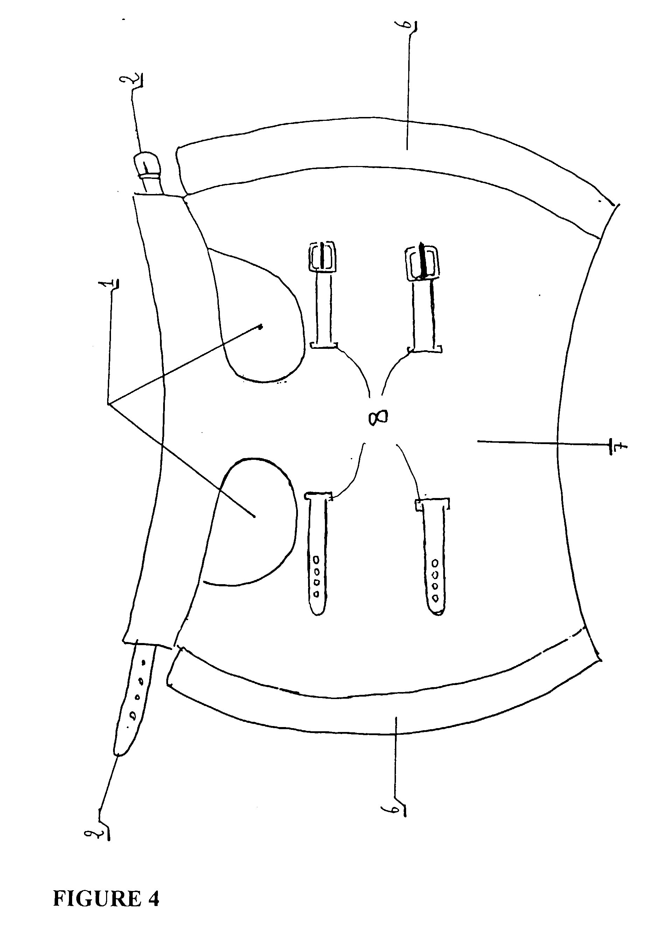

En référence à la figure 4, on prévoit de plus une boucle de serrage réglable disposée à l'intérieur du gilet, à proximité des orifices 1, pour améliorer le maintien au niveau du thorax. Cette boucle, du type ceinture, comporte une partie centrale élastique qui passe à l'extérieur du gilet par deux ouvertures 8 ménagées à cet effet. La partie centrale se prolonge par deux sections qui sont partiellement fixées à l'intérieur du gilet, au moyen d'une couture par exemple. Ces deux sections sont pourvues à leurs extrémités libres de dispositifs complémentaires qui coopèrent pour assurer le serrage de la boucle.

On peut également prévoir une autre boucle de serrage disposée approximativement au centre du gilet, à proximité des orifices 1, pour améliorer le maintien au niveau du ventre.

Les exemples de réalisation de l'invention présentés ci-dessus ont été choisis pour leur caractère concret. Il ne serait cependant pas possible de répertorier de manière exhaustive tous les modes de réalisation que recouvre cette invention. En particulier, tout moyen décrit peut-être remplacé par un moyen équivalent sans sortir du cadre de la présente invention.

## Revendications

1. Gilet de protection pour chien comportant deux orifices (1) prévus pour les pattes antérieures et une première fermeture (3) au niveau du dos, caractérisé en ce qu'il comporte de plus une deuxième fermeture (2) au niveau du cou.

2. Gilet de protection selon la revendication 1, caractérisé en ce que ladite deuxième fermeture (2) est dans le prolongement de ladite première fermeture (3).

3. Gilet de protection selon l'une quelconque des revendications précédentes, caractérisé en ce qu'il comporte une bande fluorescente(4).

4. Gilet de protection selon la revendication 3, caractérisé en ce que ladite bande fluorescente (4) est interchangeable.

5. Gilet de protection selon l'une quelconque des revendications précédentes, caractérisé en ce qu'il comporte un numéro d'identification (5).

6. Gilet de protection selon l'une quelconque des revendications précédentes, caractérisé en ce que ladite première fermeture (3) est ajustable.

7. Gilet de protection selon l'une quelconque des revendications précédentes, caractérisé en ce que sa face externe est réalisée dans une matière résistante aux agressions.

8. Gilet de protection selon l'une quelconque des revendications précédentes, caractérisé en ce qu'il est formé d'une enveloppe entourant une membrane de protection.

9. Gilet de protection selon la revendication 8, caractérisé en ce que ladite membrane de protection comporte une couche de blindage.

10. Gilet de protection selon la revendication 9, caractérisé en ce que ladite couche de blindage est composée d'une pluralité de feuilles en tissu aramide.

11. Gilet de protection selon l'une quelconque des revendications 8 à10, caractérisé en ce que ladite membrane de protection est amovible.

12. Gilet de protection selon l'une quelconque des revendications précédentes, caractérisé en ce qu'il comporte une boucle de serrage à proximité desdits orifices (1).

13. Gilet de protection selon l'une quelconque des revendications 1 à 11, caractérisé en ce qu'il comporte une boucle de serrage disposée sensiblement en son centre.
